# EUROPÄISCHE PATENTSCHRIFT

(11) **EP 3 546 397 B1**
(45) Veröffentlichungstag und Bekanntmachung des Hinweises auf die Patenterteilung: **28.04.2021**
(21) Anmeldenummer: 19170189.5
(22) Anmeldetag: 12.06.2014
(51) Int. Cl.: B65G 29/00, B67C 3/24, B67C 7/00, B65G 47/86

(54) **BEHÄLTERTRANSPORTVORRICHTUNG**
CONTAINER CONVEYOR DEVICE
DISPOSITIF DE TRANSPORT DE RÉCIPIENTS

(30) Priorität: 12.06.2013 DE 102013106084
(43) Veröffentlichungstag der Anmeldung: 02.10.2019
(62) Teilanmeldung aus: 14730507.2
(73) Patentinhaber: KHS GmbH, 44143 Dortmund (DE)
(72) Erfinder: Fahldieck, Andreas, 55743 Idar-Oberstein (DE); Krieg, Andreas, 67596 Dittelsheim-Hessloch (DE); Reimann, Thomas, 55452 Guldental (DE)

(56) Entgegenhaltungen:
- EP-A1- 2 684 805
- DE-T2- 60 114 777

## Beschreibung

Die Erfindung bezieht sich auf Behältertransportvorrichtungen gemäß Oberbegriff Patentanspruch 1.

In der Getränkeindustrie sind Behälterbehandlungsmaschinen unterschiedlichster Art und für unterschiedlichste Zwecke bekannt. Üblicherweise sind diese Maschinen in Rundläuferbauweise, d.h. als Maschinen umlaufender Bauart ausgeführt, und zwar mit einem um eine vertikale Maschinenachse umlaufend antreibbaren Rotor. Am Umfang des Rotors sind Behandlungspositionen mit Behälterträgern gebildet, die vielfach für eine hängende Halterung der Behälter ausgebildet sind, insbesondere auch zum Verarbeiten von Behältern in Form von Kunststoffflaschen (PET-Flaschen). Werden derartige Behälterbehandlungsmaschinen mit größeren Leistungen (Anzahl der behandelten Behälter je Zeiteinheit) betrieben, so treten am Rotor, aber auch an Transportsternen eines Behältereinlaufs und/oder eines Behälterauslaufs erhebliche Fliehkräfte auf, die unmittelbar auf die Behälter einwirken. Dies führt bei einer hängenden Halterung der Behälter dazu, dass diese mit ihrem Behälterboden bezogen auf die Maschinenachse radial nach außen ausweichen, sich also schräg stellen, was eine ordnungsgemäße Behandlung der Behälter zumindest stark beeinträchtigt. Besonders nachteilig ist diese durch Fliehkräfte verursachte Schrägstellung der Behälter bei Ausbildung der Behandlungsmaschine als Verschließmaschine oder als Füller, aber auch als Einlauf- und/oder Auslaufstern. Bei Verschließmaschinen führt die Schrägstellung der Behälter u.a. zu schräg sitzenden Verschlüssen, bei Füllmaschinen zu einer unsauberen Füllung und zu Verschmutzungen durch verspritztes Füllgut. Bei Einlauf- und/oder Auslaufsternen führt die Schrägstellung u.a. zu einer nicht ordnungsgemäßen Übergabe der Behälter, zu klemmenden Behältern, zu einem Behälterbruch und/oder Behälterstau usw.

Um die durch Fliehkräfte bedingte Schrägstellung der Behälter zu vermeiden, wurde bereits vorgeschlagen (DE 601 14 777 T2), unterhalb der Behälterträger eine äußere mit dem Rotor nicht mit bewegte Behälterabstützfläche vorzusehen, die die Behälter bezogen auf die Maschinenachse außen an ihrer Behältermantel- oder -außenfläche am Behälterboden abstützt und einen kegelringförmigen, Maschinenachse umschließenden Verlauf derart aufweist, dass der radiale Abstand der Behälterabstützfläche von der Maschinenachse mit zunehmenden vertikalen Abstand von den Behälterträgern abnimmt. Zur Anpassung an unterschiedliche Behältergrößen bzw. Behälterbodendurchmesser ist die äußere Abstützfläche bzw. eine diese Abstützfläche bildende ringartige Behälterführung in Richtung der Maschinenachse höhenverstellbar. Um die an den Behälterträgern des Rotors hängend gehaltenen Behälter auch in Umfangsrichtung des Rotors abzustützen, sind am Rotor oberhalb der äußeren Behälterabstützfläche Behälteraufnahmen vorgesehen, die die Behälter jeweils mit einem Teil ihres Umfangs aufnehmen. Die Behälteraufnahmen bilden zusammen mit der äußeren Behälterabstützfläche eine Behälterabstützeinrichtung. Nachteilig hierbei ist, dass bei Verarbeitung von Behältern unterschiedlicher Größe bzw. mit unterschiedlichem Behälterdurchmesser die Behälteraufnahmen am Rotor in aufwändiger Weise ausgetauscht werden müssen.

DE60114777T2 offenbart die Merkmale des Oberbegriffs des Anspruchs 1.

EP2684805A1 ist Teil der Zwischenliteratur nach Artikel 54(3) EPÜ und offenbart eine mit dem Rotor umlaufende innere Behälterabstützfläche.

Aufgabe der Erfindung ist es, eine Behältertransportvorrichtung aufzuzeigen, die die vorgenannten Nachteile vermeidet und bei der in einfacher Weise ausschließlich durch eine Höhenverstellung eine Anpassung an Behälter unterschiedlicher Größe bzw. mit unterschiedlichen Behälterdurchmessern möglich ist.

Zur Lösung dieser Aufgabe ist eine Behältertransportvorrichtung entsprechend dem Patentanspruch 1 ausgebildet.

Die erfindungsgemäße Behältertransportvorrichtung ist bevorzugt Bestandteil einer Behälterbehandlungsmaschine und dabei insbesondere derjenige Bestandteil der Behälterbehandlungsmaschine, auf dem die Behandlung der Behälter erfolgt bzw. die Behandlungspositionen gebildet sind.

"Höhenverstellung" bedeutet im Sinne der Erfindung eine Verstellung, bei der die Verstellbewegung, zumindest aber die Hauptkomponente der Verstellbewegung in Richtung der Maschinenachse erfolgt.

"Behälter" sind im Sinne der Erfindung insbesondere Flaschen, aber auch andere Behälter, die zum Abfüllen von pulverförmigen, granulatartigen, flüssigen oder 10793_2 WO/EP

viskosen Produkten geeignet und für eine hängende Halterung an Behälterträgern eines umlaufenden Transportelementes ausgebildet sind sowie z.B. aus Metall, Glas und/oder Kunststoff bestehen.

Der Ausdruck "im Wesentlichen" bzw. "etwa" bzw. "ca." bedeutet im Sinne der Erfindung Abweichungen vom jeweils exakten Wert um +/- 10%, bevorzugt um +/-5% und/oder Abweichungen in Form von für die Funktion unbedeutenden Änderungen.

Erfindungsgemäß ist dabei vorgesehen, dass die wenigstens eine innere Behälterabstützfläche mit dem Rotor nicht umlaufend ausgebildet ist, dass die wenigstens eine innere Behälterabstützfläche zusammen mit der wenigstens einen äußeren Behälterabstützfläche einen rinnenartigen, beispielsweise v-förmigen Führungskanal bildet, der sich entlang einer Bewegungsbahn erstreckt, auf der sich die Behälterböden der mit dem Rotor mitbewegten Behälter bewegen und dass der Führungskanal mit wenigstens einer Verstelleinrichtung höhenverstellbar ist,
und dass sich der Führungskanal auch in einen Übergabebereich erstreckt, an dem die Behälter an die Behälterträger des Rotors übergeben und/oder von den Behälterträgern des Rotors entnommen werden,

In Weiterbildung der Erfindung ist die Behältertransportvorrichtung beispielsweise so ausgeführt, dass sich der Führungskanal auch in einen Bereich der Bewegungsbahn der Behälterböden der hängend an einem Transportstern eines Behältereinlauf und/oder Behälterauslauf gehaltenen Behälter (2) erstreckt,
und/oder
dass die wenigstens eine Verstelleinrichtung ein Spindelantrieb ist, wobei die vorgenannten Merkmale jeweils einzeln oder in beliebiger Kombination verwendet sein können.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: in vereinfachter Darstellung und in Draufsicht eine Behälterbehandlungsmaschine mit einer Behältertransportvorrichtung gemäß der Erfindung;
- Fig. 2: in Einzeldarstellung ein umlaufendes Transportelement (Rotor) der Behandlungsmaschine der Figur 1 in einem Betriebszustand für die Behandlung großvolumiger Behälter (nicht Teil der Erfindung);
- Fig. 3: in vereinfachter Einzeldarstellung eine der Behandlungspositionen der Behälterbehandlungsmaschine der Figur 1 in dem Betriebszustand zur Behandlung großvolumiger Behälter (nicht Teil der Erfindung);
- Fig. 4 und 5: Darstellung wie Figuren 2 und 3 bei einem Betriebszustand zur Behandlung kleinvolumiger Behälter (nicht Teil der Erfindung);
- Fig. 6: in Einzeldarstellung eine Behälterabstützeinrichtung der Behälterbehandlungsmaschine der Figur 1 (nicht Teil der Erfindung);
- Fig. 7: in perspektivischer Teildarstellung den umlaufenden Rotor einer Behälterbehandlungsmaschine im Bereich eines von einem Transportstern gebildeten Behältereinlaufs oder Behälterauslaufs, in Blickrichtung von oben;
- Fig. 8: in perspektivischer Teildarstellung den Bereich der Behälterbehandlungsmaschine der Figur 7, in Blickrichtung von unten;
- Fig. 9: in Teildarstellung eine Unteransicht auf den Bereich der Behälterbehandlungsmaschine der Figur 7.

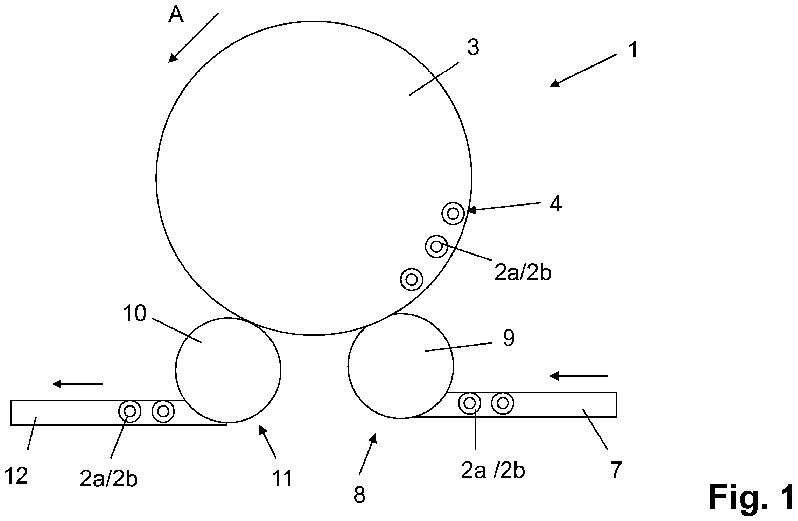

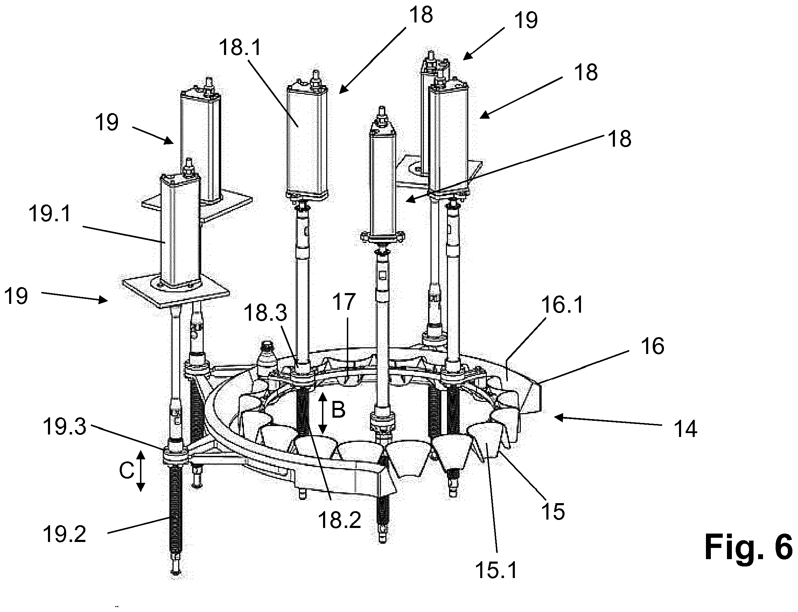

Die in den Figuren 1 - 6 allgemein mit 1 bezeichnete Behälterbehandlungsmaschine ist zur Verarbeitung von Behältern, beispielsweise in Form von Flaschen, insbesondere solchen aus Kunststoff (PET-Flaschen) mit unterschiedlicher Größe und mit unterschiedlichem Flaschen- oder Behälterdurchmesser ausgebildet, beispielsweise zur Verarbeitung von den großvolumigen mit 2a bezeichneten Behältern und von kleinvolumigen mit 2b bezeichneten Behältern. Mit 2a sind die mit der Behandlungsmaschine 1 noch zu verarbeitenden Behälter mit dem größten Volumen sowie Behälterdurchmesser und mit b2 entsprechend die mit der Behandlungsmaschine 1 noch zu verarbeitenden Behälter mit dem kleinsten Volumen sowie Behälterdurchmesser bezeichnet. An jede Behältergröße zwischen diesen Extremen ist die Behandlungsmaschine 1 anpassbar.

Die Behälterbehandlungsmaschine 1, die beispielsweise als Füllmaschine zum Füllen der Behälter 2a, 2b oder aber als Verschließmaschine zum Verschließen der gefüllten Behälter 2a, 2b dient, umfasst u.a. einen um eine vertikalen Maschinenachse MA umlaufend antreibbaren Rotor 3, an dessen Umfang in gleichmäßigen Winkelabständen um die Maschinenachse versetzt Behandlungspositionen 4 gebildet sind. Letztere umfassen jeweils einen Behandlungskopf 5, der an die jeweilige Art der Behandlung angepasst ist, sowie einen Behälterträger 6 zur hängenden Halterung des jeweiligen Behälters 2a bzw. 2b an einem Behälterflansch unterhalb der Behältermündung.

Bei der dargestellten Ausführungsform umfasst der Rotor 3 u.a. ein oberes kreisringförmiges Rotorelement 3.1, an welchem insbesondere die Behälterträger 6 vorgesehen sind, sowie ein unteres kreisscheibenförmiges Rotorelement 3.2, welches an einer mit dem Rotor 3 umlaufend angetriebenen Rotorsäule 3.3 vorgesehen ist. Über eine Vielzahl von Führungs- und/oder Haltestangen 3.4 ist das Rotorelement 3.1 mit den übrigen Elementen des Rotors 3 verbunden. Die Behandlungsköpfe 5 sind beispielsweise an einem weiteren, nicht dargestellten Rotorelement vorgesehen.

Die zu behandelnden Behälter 2a, 2b werden den Behandlungspositionen 4 über einen äußeren Transporteur 7 und über einen Behältereinlauf 8 zugeführt, der u.a. einen Transportstern 9 aufweist. Die behandelten Behälter 2a, 2b werden den Behandlungspositionen 4 an einem einen Transportstern 10 aufweisenden Behälterauslauf 11 entnommen und an einen äußeren Transporteur 12 weitergeleitet. Die beiden Transportsterne 9 und 10 sind jeweils synchron mit dem Rotor 3 um vertikale Achsen umlaufen angetrieben.

Die Behandlung der Behälter 2a, 2b erfolgt auf dem Winkelbereich der Drehbewegung (Pfeil A) des Rotors 3 zwischen den Behältereinlauf 7 und dem Behälterauslauf 11. Für den sicheren Halt der Behälter 2a, 2b an den Behälterträger 6 ist eine äußere Führung 13 vorgesehen, gegen die die Behälter 2a, 2b im Bereich ihres unterhalb der Behältermündung gebildeten Behälterflansches (Neckring) anliegen.

Um zu gewährleisten, dass die Behälter 2a, 2b auch bei einer hohen Leistung der Behälterbehandlungsmaschine 1, d.h. bei mit hoher Geschwindigkeit umlaufendem Rotor 3 und trotz der dabei auf die Behälter 2a, 2b ausgeübten Zentrifugal- oder Fliehkräfte mit ihrer Behälterachse in der erforderlichen Weise parallel oder zumindest im Wesentlichen parallel zur Maschinenachse MA und dabei auch achsgleich oder zumindest im Wesentlichen achsgleich mit der Achse BA des jeweiligen Behandlungskopfes 5 angeordnet sind, weist die Behälterbehandlungsmaschine 1 unterhalb der Behälterträger 6 eine Behälterabstützeinrichtung 14 auf. Diese besteht aus einer Vielzahl von konischen Behältertaschen 15 und einer äußeren schrägen oder kegelringförmigen Behälterführung 16 für die Außen- oder Mantelfläche jedes Behälters 2a, 2b im Bereich des Behälterbodens 2a.1, 2b.1. Jeder Behandlungsposition 4 ist eine eigene Behältertasche 15 zugeordnet. Die Behältertaschen 15 sind an einem gemeinsamen, die Maschinenachse MA konzentrisch umschließenden Träger oder Tragring 17 vorgesehen, und zwar bei der dargestellten Ausführungsform derart, dass sich die Behältertaschen 15 an der bezogen auf die Maschinenachse MA radial außenliegenden Seite des Tragringes 17 befinden. Weiterhin sind die Behältertaschen 15 jeweils bezogen auf die Maschinenachse MA radial außen liegend offen. Jede Behältertasche 15 bildet eine Behälterabstützfläche 15.1, gegen die der jeweilige Behälter 2a, 2b mit seiner Außen- oder Mantelfläche unmittelbar am Behälterboden 2a.1 bzw. 2b.1 anliegt. Der Tragring 17 ist Bestandteil des Rotors 3, sodass die Behältertaschen 15 mit dem Rotor 3 und mit den dortigen Behandlungspositionen 4 um die Maschinenachse MA umlaufen.

Die Behältertaschen 15 sind so ausgeführt, dass sie sich jeweils in Umfangsrichtung des Rotors 3 mit zunehmendem vertikalem Abstand von dem Behandlungskopf 5 bzw. Behälterträger 6 verengen. Weiterhin sind die Behältertaschen 15 so ausgebildet, dass ihre Behälterabstützfläche 15.1 mit zunehmendem vertikalem Abstand von dem Behandlungskopf 5 bzw. Behälterträger 6 einen zunehmenden radialen Abstand von der Maschinenachse MA aufweisen. Speziell sind die Behälterabstützflächen 15.1 der bei der dargestellten Ausführungsform so geformt, dass sie Teil einer Mantelfläche eines achsgleich mit der Achse BA angeordneten und sich mit zunehmenden Abstand vom jeweiligen Behandlungskopf 5 verjüngenden Kegels sind und dessen obere Kegelfläche etwa gleich dem Bodendurchmesser der Behälter 2a ist und dessen untere Kegelfläche etwa gleich dem Bodendurchmesser der Behälter 2b ist.

Die äußere Behälterführung 16 ist kegelringartig ausgeführt und bildet eine Behälterabstützfläche 16.1 gegen die die Behälter 2a, 2b ebenfalls mit ihrer Außenfläche am Behälterboden 2a.1, 2b.1 anliegen. Mit zunehmendem vertikalem Abstand von den Behandlungsköpfen 5 weist die Behälterabschnittsfläche 16.1 einen abnehmenden radialen Abstand von der Maschinenachse MA auf. Die mit dem Rotor 3 nicht umlaufende, d.h. an einem Maschinengestell der Behandlungsmaschine 1 vorgesehene äußere Behälterführung 16 erstreckt sich über den Winkelbereich der Drehbewegung des Rotors 3 zwischen dem Behältereinlauf 7 und dem Behälterauslauf 11.

Die Behältertaschen 15 sind weiterhin so ausgebildet, dass der jeweilige Behälter 2a, 2b lediglich mit einem Teilbereich seines Umfangs, d.h. beispielsweise maximal mit seinem halben Umfang in der jeweiligen Behältertasche 15 aufgenommen ist. Die Zuordnung der äußeren Behälterführung 16 zu den mit dem Rotor 3 umlaufenden Behältertaschen 15 ist weiterhin so gewählt, dass der bezogen auf die Maschinenachse MA radiale Abstand zwischen der Behälterabschnittsfläche 16.1 und dem der Maschinenachse MA am nächsten liegenden Teil der Behälterabschnittsfläche 15.1 im oberen Bereich der Behälterabstützeinrichtung 14, d.h. im Bereich des oberen Randes der Behältertaschen 15 und der Behälterführung 16 in etwa gleich dem Bodendurchmesser der Behälter 2a und im unteren Bereich der Behälterabstützeinrichtung 14, d.h. im Bereich des unteren Randes der Behältertaschen 15 und der Behälterführung 16 in etwa gleich dem Bodendurchmesser der Behälter 2b ist.

Durch am Rotor 3 vorgesehene Verstelleinrichtungen 18 sind der Tragring 17 und damit auch die Behältertaschen 15 zur Anpassung der Abstützeinrichtung 14 an unterschiedliche Behältergrößen bzw. an unterschiedliche Behältervolumen höhenverstellbar (Doppelpfeil B). Analog hierzu ist auch die äußere Behälterführung 16 mit am Maschinengestell vorgesehenen Verstelleinrichtungen 19 zur Anpassung an unterschiedliche Behältergrößen und Behälterdurchmesser höhenverstellbar (Doppelpfeil C). Die Verstelleinrichtungen 18 und 19 sind beispielsweise Linearantriebe, z.B. Spindelantriebe.

Näher im Detail umfassen die Verstellelemente 18 bei der dargestellten Ausführungsform jeweils einen beispielsweise elektrischen Verstellmotor 18.1, von dem Verstellmotor 18.1 angetriebene und mit ihrer Achse parallel zur Maschinenachse MA angeordnete Gewindespindel 18.2 sowie ein Muttergewindestück 18.3, in welches die Gewindespindel 18.2 eingreift und welches an dem Tragring 17 vorgesehen ist.

Näher im Detail umfassen die Verstellelemente 19 bei der dargestellten Ausführungsform jeweils einen beispielsweise elektrischen Verstellmotor 19.1, eine von dem Verstellmotor 19.1 angetriebene und mit ihrer Achse parallel zur Maschinenachse MA orientierte Gewindespindel 19.2 sowie ein Muttergewindestück 19.3, in welches die Gewindespindel 19.2 eingreift und welches mit der äußeren Behälterführung 16 verbunden ist.

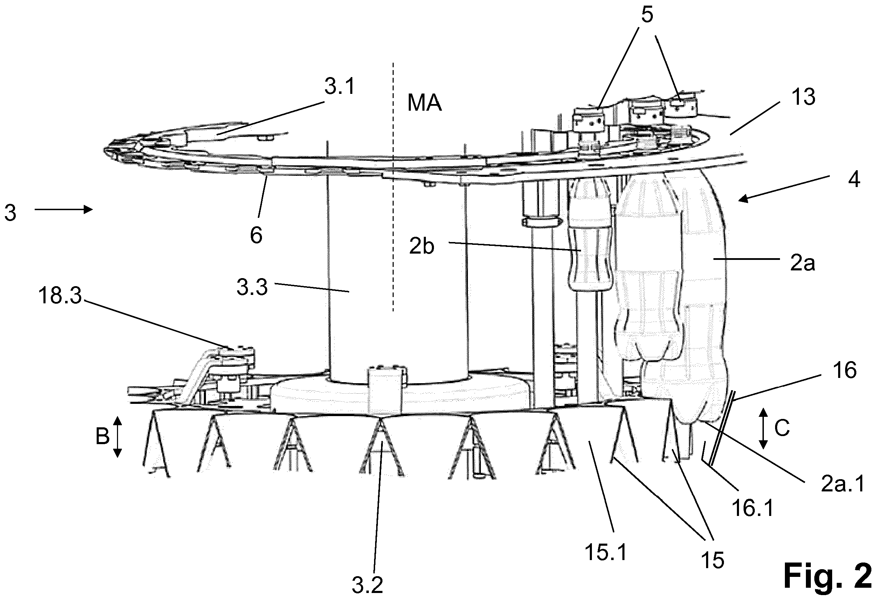

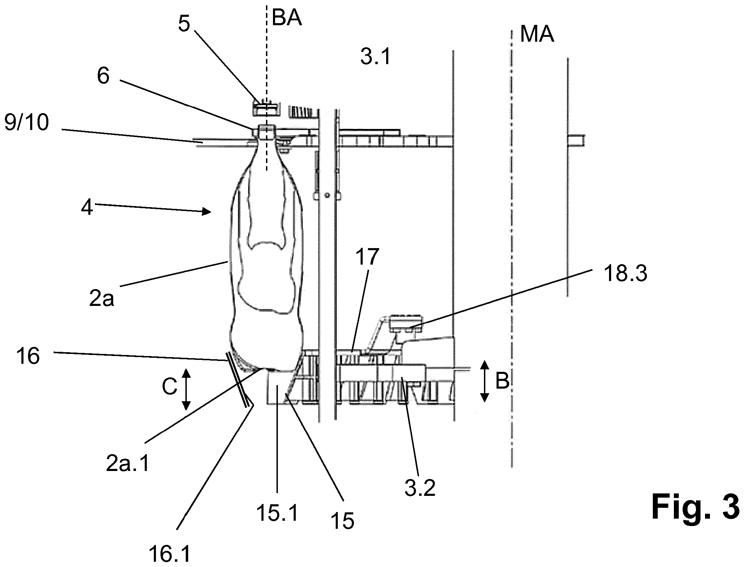

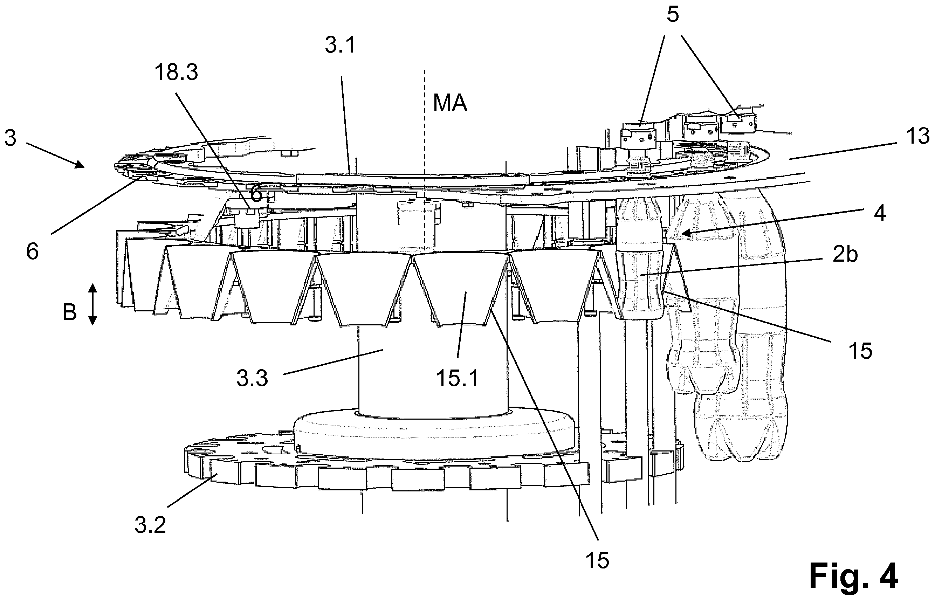

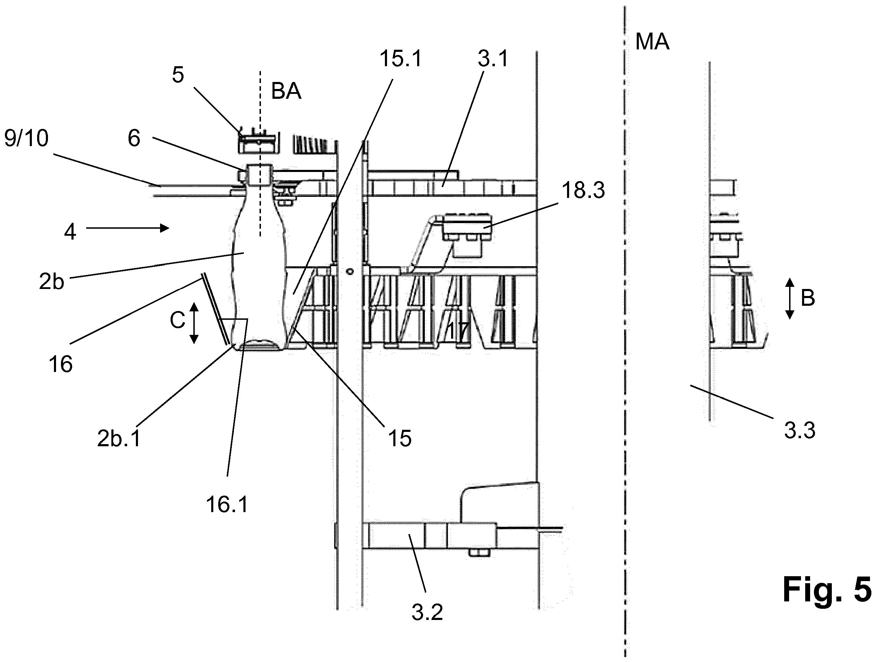

Wie insbesondere die Figuren 2 und 3 zeigen, befinden sich der Tragring 17 mit den Behältertaschen 15 sowie auch die äußere Behälterführung 16 für die Verarbeitung der Behälter 2a in der untersten Verstellposition der Höhenverstellung. Wie Figuren 4 und 5 zeigen, befinden sich der Tragring 17 mit den Behältertaschen 15 und die äußere Behälterführung 16 für die Verarbeitung der Behälter 2b in der obersten Verstellposition der Höhenverstellung. Zur Bearbeitung von Behältern, deren Größe und Behälterdurchmesser zwischen den Behältern 2a und 2b liegt, erfolgt eine entsprechende, vorzugsweise stufenlose Einstellung der Behältertaschen 15 und der äußeren Behälterführung 16 über die Verstelleinrichtungen 18 und 19. In jedem Fall erfolgt die Höhenverstellung so, dass die jeweils zu verarbeitenden Behälter sich in Umfangsrichtung des Rotors 3 zuverlässig in den Behältertaschen 15 und radial zur Maschinenachse MA zuverlässig zwischen der jeweiligen Behältertasche 15 und der äußeren Behälterführung 16 am Behälterboden abstützen.

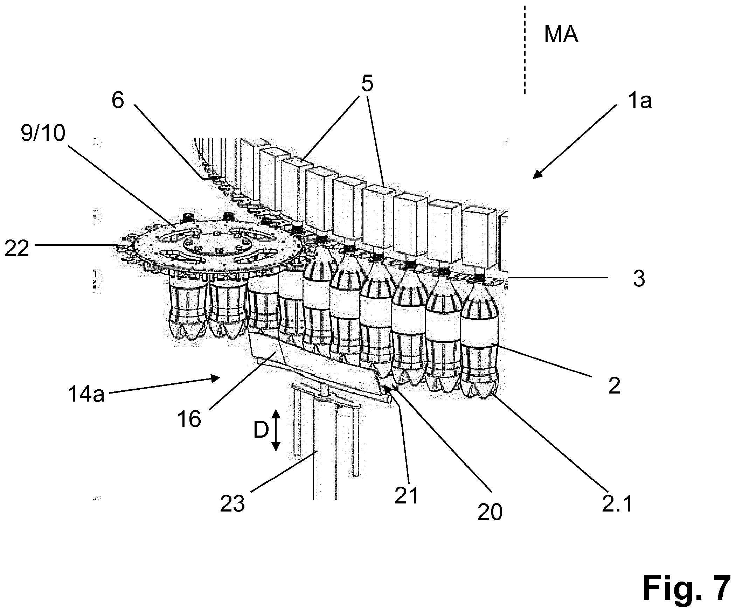

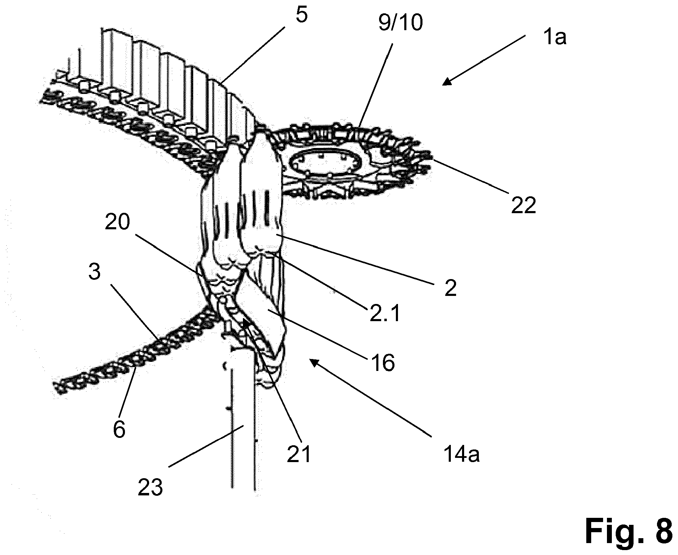

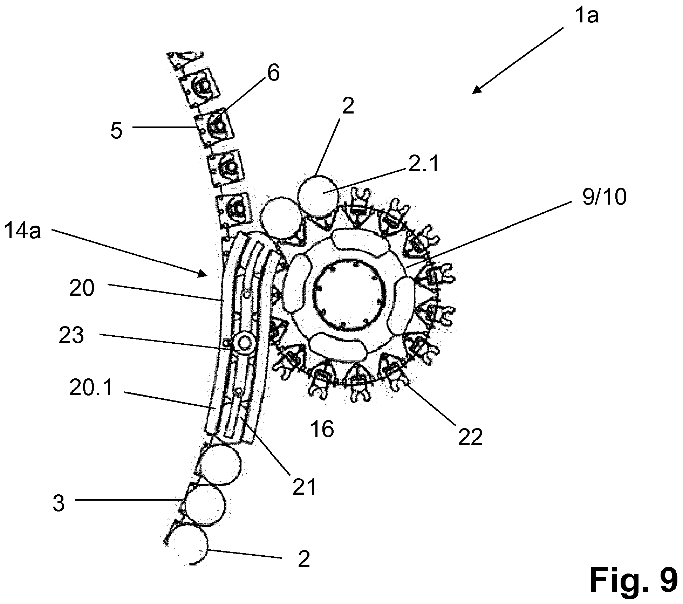

Die Figuren 7 - 9 zeigen als Ausführungsform der Erfindung eine Behälterbehandlungsmaschine 1a, die sich von der Behälterbehandlungsmaschine 1 grundsätzlich nur dadurch unterscheidet, dass anstelle der Behälterabstützeinrichtung 14 eine Abstützeinrichtung 14a vorgesehen ist, die sich bei der in den Figuren dargestellten Ausführungsform lediglich über einen Bereich erstreckt, an dem die Übergabe der Behälter 2 vom Transportstern 9 an die Behandlungspositionen 4 und/oder die Entnahme der Behälter 2 mit dem Transportstern 10 von den Behandlungspositionen 4 erfolgt. Die Behälterabstützeinrichtung 14a, die wiederum zur Führung und Abstützung der hängend am Rotor 3 gehaltenen Behälter 2 an ihrem Behälterboden 2.1 dient, besteht aus der bezogen auf die Maschinenachse MA äußeren Behälterführung 16 und einer bezogen auf die Maschinenachse MA radial innen liegende Behälterführung 20. Beide Behälterführungen 16 und 20 sind so ausgebildet und mit dem Rotor 3 nicht umlaufend angeordnet, dass sie zwischen sich einen rinnenartigen, v-förmigen Führungskanal 21 bilden, der oben und unten offen ist und dessen Breite sich senkrecht zu der Transportrichtung der Behälter 2 mit zunehmendem vertikalen Abstand von der Ebene verengt, auf der sich die Behälterträger 6 bei umlaufendem Rotor 3 bewegen.

Ist die Behälterabstützeinrichtung 14a am Behältereinlauf vorgesehen, so erstreckt sie sich über einen Teilbereich der Transportstrecke der hängend an dem Transportstern 9 gehaltenen Behälter 2, d.h. unterhalb der am Transportstern 9 für die hängende Halterung der Behälter 2 vorgesehenen Behälterträger 22, und zwar über einen kurzen Winkelbereich der Drehbewegung des Transportsternes 9 und anschließend über einen Winkelbereich der Drehbewegung des Rotors 3 unterhalb der dortigen Behälterträger 6. Ist die Behälterabstützeinrichtung 14a am Behälterauslauf, so erstreckt sich der Führungskanal 21 entlang der Bewegungsbahn der Behälter 2 am Rotor 3 vor dem Behälterauslauf, d.h. über einen Winkelbereich der Drehbewegung des Rotors 3 unterhalb der Behälterträger 6 vor dem Behälterauslauf, und dann anschließend über einen Teil der Transportstrecke der Behälter 2 am Transportstern 10, d.h. unterhalb der dortigen Behälterträger 22 über einen Winkelbereich der Drehbewegung des Transportsternes 10.

Die Behälterabstützeinrichtung 14a ist wiederum so ausgebildet, dass die größere Breite, die der Führungskanal 21 senkrecht zur Transportrichtung der Behälter 2 an seiner Oberseite aufweist, gleich oder im Wesentlichen gleich dem Bodendurchmesser der Behälter 2 mit der größten Behältergröße oder dem größten Behälterdurchmesser ist und die Breite, die der Führungskanal 21 senkrecht zur Transportrichtung der Behälter 2 an seiner Unterseite aufweist, gleich oder im Wesentlichen gleich dem Bodendurchmesser der Behälter 2 mit der kleinsten Größe oder dem kleinsten Behälterdurchmesser ist. Durch eine Höhenverstellung, d.h. durch gemeinsames Anheben und Absenken (Doppelpfeil D) der Behälterführungen 16 und 20 mit wenigstens einem Verstellelement 23 ist eine Anpassung an unterschiedliche Behältergrößen und Behälterdurchmesser möglich ist, und zwar derart, dass die Behälter 2 jeweils im Bereich ihres Behälterbodens an den Behälterführungen 16 und 20 geführt sind.

Grundsätzlich besteht auch die Möglichkeit, anstelle der inneren Behälterführung 20 Behälteraschen 15 vorzusehen, die dann in gleicher Weise, wie dies für Behandlungsmaschine 1 beschrieben wurde, am Rotor 3 bzw. an einem dortigen Tragring 17 und mit dem Rotor 3 umlaufend angeordnet sind (nicht Teil der Erfindung).

### Bezugszeichenliste

- 1, 1a: Behälterbehandlungsmaschine mit Behältertransportvorrichtung
- 2, 2a, 2b: Behälter
- 2.1, 2a.1, 2b.1: Behälterboden
- 3: Rotor
- 3.1, 3.2: Rotorelement
- 3.3: Säule
- 4: Behandlungsposition
- 5: Behandlungskopf
- 6: Behälterträger
- 7: äußerer Transporteur
- 8: Behältereinlauf
- 9, 10: Transportstern
- 11: Behälterauslauf
- 12: äußerer Transporteur
- 13: Führung
- 14, 14a: Abstützeinrichtung
- 15: Behältertasche
- 15.1: Behälterabschnittsfläche
- 16: äußere Behälterführung
- 16.1: Behälterabstützfläche
- 17: Tragring
- 18, 19: Verstelleinrichtung
- 18.1, 19.1: Verstellmotor
- 18.2, 19.2: Gewindespindel
- 18.3, 19.3: Muttergewindestück
- 20: innere Führung
- 21: Führungskanal
- 22: Behälterträger
- 23: Verstelleinrichtung
- A: Dreh- oder Transportrichtung des Rotors 3
- B, C, D: Höhenverstellung
- BA: Achse der Behandlungsposition 4

## Patentansprüche

1. Behältertransportvorrichtung mit einem um eine vertikale Maschinenachse (MA) umlaufenden Rotor (3), mit mehreren Behälterträgern (6), die um die Maschinenachse (MA) verteilt am Rotor (3) für eine hängende Halterung von Behältern (2, 2a, 2b) vorgesehen sind, mit einer Behälterabstützeinrichtung (14, 14a) zur Abstützung der Behälter (2, 2a, 2b) an ihrer Behälteraußen- oder -mantelfläche im Bereich des Behälterbodens (2.1, 2a.1, 2b.1), wobei die Behälterabstützeinrichtung (14, 14a) mit wenigstens einer äußeren Behälterführung (16) mit Behälterabstützfläche (16.1), die die Maschinenachse (MA) kegelflächenartig umschließt und eine Abstützung der Behälter (2, 2a, 2b) im Bereich ihres Behälterbodens (2.1, 2a.1, 2b.1) an der bezogen auf die Maschinenachse (MA) radial außenliegenden Behälteraußenfläche bewirkt und die zur Anpassung an unterschiedliche Behälterbodendurchmesser höhenverstellbar ist, sowie mit wenigstens einer inneren Behälterabstützfläche (15.1, 20.1) ausgebildet ist, die eine Abstützung der Behälter (2, 2a, 2b) an ihrer bezogen auf die Maschinenachse (MA) radial innen liegenden Behälteraußenfläche bewirkt, **dadurch gekennzeichnet, dass** die wenigstens eine innere Behälterabstützfläche (15.1, 20.1) der Behälterabstützfläche (16.1) der äußeren Behälterführung (16) bezogen auf die Maschinenachse (MA) für eine Abstützung der Behälter (2, 2a, 2b) im Bereich ihres Behälterbodens (2.1, 2a.1, 2b.1) radial gegenüberliegend angeordnet ist,
dass die äußeren und inneren Behälterabstützflächen (16.1; 15.1, 20.1) wenigstens eine sich mit zunehmendem Abstand von den Behälterträgern (6) verengende Aufnahme für die Behälterböden (2.1, 2a.1, 2b.1) bilden, und dass auch die wenigstens eine innere Behälterabstützfläche (15.1, 20.1) zur Anpassung der Behälterabstützeinrichtung (14, 14a) an unterschiedliche Behälterbodendurchmesser höhenverstellbar ist,
und dass die wenigstens eine innere Behälterabstützfläche (20.1) mit dem Rotor (3) nicht umlaufend ausgebildet ist und zusammen mit der wenigstens einen äußeren Behälterabstützfläche (16.1) einen rinnenartigen Führungskanal (21) bildet, der sich entlang einer Bewegungsbahn erstreckt, auf der sich die Behälterböden (2.1) der mit dem Rotor (3) mitbewegten Behälter (2) bewegen und dass der Führungskanal (21) mit wenigstens einer Verstelleinrichtung (23) höhenverstellbar ist, und dass sich der Führungskanal (21) auch in einen Übergabebereich erstreckt, an dem die Behälter (2) an die Behälterträger (6) des Rotors (3) übergeben und/oder von den Behälterträgern (6) des Rotors (3) entnommen werden.

2. Behälterbehandlungsmaschine nach einem der vorhergehenden Ansprüche, **dadurch gekennzeichnet, dass** sich der Führungskanal (21) auch in einem Bereich der Bewegungsbahn der Behälterböden (2.1) der hängend an einem Transportstern (9, 10) eines Behältereinlaufs und/oder Behälterauslaufs gehaltenen Behälter (2) erstreckt.

3. Behältertransportvorrichtung nach einem der vorhergehenden Ansprüche, **dadurch gekennzeichnet, dass** die wenigstens eine Verstelleinrichtung (18, 19, 23) ein Spindelantrieb ist.

4. Behältertransportvorrichtung nach einem der vorhergehenden Ansprüche, **dadurch gekennzeichnet, dass** sie Bestandteil einer Behälterbehandlungsmaschine (1, 1a), beispielsweise einer Füllmaschine zum Füllen der Behälter (2, 2a, 2b) oder einer Verschließmaschine zum Verschließen der Behälter (2, 2a, 2b), oder ein Transportstern ist.

## Claims

1. Container conveyor device with a rotor (3) circulating about a vertical machine axis (MA), with a plurality of container carriers (6), which are provided distributed on the rotor (3) about the machine axis (MA) for the suspended holding of containers (2, 2a, 2b), with a container support device (14, 14a) for supporting the containers (2, 2a, 2b) on their container outer surfaces or casing surfaces in the region of the container base (2.1, 2a.1, 2b.1), wherein the container support device (14, 14a) takes effect with at least one outer container guide (16), with a container support surface (16.1) which surrounds the machine axis (MA) in the form of a cone and serves as a support for the containers (2, 2a, 2b) in the region of their container bases (2.1, 2a.1, 2b.1), on the container outer surface which is radially outside in relation to the machine axis (MA), and which is height adjustable for adapting to different container base diameters, and is configured with at least one inner container support surface (15.1, 20.1), which has the effect of providing support for the containers (2, 2a, 2b) on their container outer surface located radially inwards in relation to the machine axis (MA), **characterised in that**
the at least one inner container support surface (15.1, 20.1) of the container support surface (16.1) of the outer container guide (16) related to the machine axis (MA), for supporting the containers (2, 2a, 2b), is arranged radially opposite in the region of their container bases (2.1, 2a.1, 2b.1),
that the outer and inner container support surfaces (16.1, 15.1, 20.1) form at least one receiver for the container bases (2.1, 2a.1, 2b.1), which tapers with the increasing distance interval from the container carriers (6), and that also the at least one inner container support surface (15.1, 20.1) is height adjustable in order to adapt the container support device (14, 14a) to different container base diameters, and that the at least one inner container support surface (20.1) is configured such as not to circulate with the rotor (3), and
together with the at least one outer container support surface (16.1) forms a guide channel (21) in the form of a trough or gully, which extends along a movement path on which the container bases (2.1) move together with the containers (2) which are moved with the rotor (3), and that the guide channel (21) is height adjustable by means of at least one adjustment device (23), and that the guide channel (21) also extends into a transfer region, in which the containers (2) are transferred to the container carriers (6) of the rotor (3) and/or are taken off from the rotor carriers (6) of the rotor (3).

2. Container handling machine according to any one of the preceding claims, **characterised in that** the guide channel (21) also extends in a region of the movement path of the container bases (2.1) of the containers (2), being held suspended at a transport star (9, 10) of a container inlet and/or container outlet.

3. Container conveyor device according to any one of the preceding claims, **characterised in that** the at least one adjustment device (18, 19, 23) is a spindle drive.

4. Container conveyor device according to any one of the preceding claims, **characterised in that** it is a constituent part of a container handling machine (1, 1a), for example of a filling machine for the filling of containers (2, 2a, 2b) or of a closing machine for the closing of containers (2, 2a, 2b), or is a transport star.

## Revendications

1. Dispositif de transport de contenants avec un rotor (3) tournant en périphérie autour d'un axe de machine (MA) vertical, avec plusieurs supports de contenant (6), qui sont prévus de manière répartie autour de l'axe de machine (MA) sur le rotor (3) pour fixer de manière suspendue des contenants (2, 2a, 2b), avec un système de soutien de contenants (14, 14a) pour soutenir les contenants (2, 2a, 2b) sur leur surface extérieure ou enveloppante de contenant dans la zone du fond de contenant (2.1, 2a.1, 2b.1), dans lequel le système de soutien de contenants (14, 14a) est réalisé avec au moins un guide de contenants extérieur (16) avec une surface de soutien de contenants (16.1), qui entoure l'axe de machine (MA) à la manière d'une surface conique et entraîne un soutien des contenants (2, 2a, 2b) dans la zone de leur fond de contenant (2.1, 2a.1, 2b.1) sur la surface extérieure de contenant située à l'extérieur radialement par rapport à l'axe de machine (MA) et qui peut être ajustée en hauteur pour l'adaptation aux différents diamètres de fond de contenant, ainsi qu'avec au moins une surface de soutien de contenant intérieure (15.1, 20.1), qui entraîne un soutien des contenants (2, 2a, 2b) sur leur surface extérieure de contenant située à l'intérieur radialement par rapport à l'axe de machine (MA),
**caractérisé en ce que**
l'au moins une surface de soutien de contenant intérieure (15.1, 20.1) est disposée de manière à faire face radialement à la surface de soutien de contenants (16.1) du guide de contenants extérieur (16) par rapport à l'axe de machine (MA) pour un soutien des contenants (2, 2a, 2b) dans la zone de leur fond de contenant (2.1, 2a.1, 2b.1),
que les surfaces de soutien de contenants extérieures et intérieures (16.1 ; 15.1, 20.1)forment au moins un logement pour les fonds de contenant (2.1, 2a.1, 2b.1) se rétrécissant au fur et à mesure que la distance des supports de contenant (6) augmente, et
qu'également l'au moins une surface de soutien de contenants intérieure (15.1, 20.1) peut être ajustée en hauteur pour adapter le système de soutien de contenants (14, 14a) aux différents diamètres de fond de contenant,
et que l'au moins une surface de soutien de contenants intérieure (20.1) n'est pas réalisée de manière à tourner en périphérie avec le rotor (3) et forme, conjointement avec l'au moins une surface de soutien de contenants extérieure (16.1), un canal de guidage (21) de type rigole, qui s'étend le long d'une trajectoire de déplacement sur laquelle les fonds de contenant (2.1) des contenants (2) entraînés en déplacement avec le rotor (3) se déplacent et que le canal de guidage (21) peut être ajusté en hauteur avec au moins un système d'ajustement (23), et que le canal de guidage (21) s'étend également dans une zone de transfert sur laquelle les contenants (2) sont transférés aux supports de contenant (6) du rotor (3) et/ou sont retirés des supports de contenant (6) du rotor (3).

2. Machine de traitement de contenants selon l'une quelconque des revendications précédentes, **caractérisée en ce que** le canal de guidage (21) s'étend également dans une zone de la trajectoire de déplacement des fonds de contenant (2.1) des contenants (2) maintenus de manière suspendue sur une étoile de transport (9, 10) d'une entrée de contenants et/ou d'une sortie de contenants.

3. Dispositif de transport de contenants selon l'une quelconque des revendications précédentes, **caractérisé en ce que** l'au moins un système d'ajustement (18, 19, 23) est un entraînement de broche.

4. Dispositif de transport de contenants selon l'une quelconque des revendications précédentes, **caractérisé en ce qu'**il fait partie intégrante d'une machine de traitement de contenants (1, 1a), par exemple d'une machine remplisseuse pour remplir les contenants (2, 2a, 2b) ou d'une capsuleuse pour fermer les contenants (2, 2a, 2b), ou est une étoile de transport.
